# EUROPÄISCHE PATENTSCHRIFT

(11) **EP 1 074 488 B1**
(45) Veröffentlichungstag und Bekanntmachung des Hinweises auf die Patenterteilung: **25.09.2002**
(21) Anmeldenummer: 00118646.9
(22) Anmeldetag: 29.08.2000
(51) Int. Cl.: B65G 1/04, C12M 1/12

(54) **Klimaschrank mit Lageranlage**
Air conditioned cabinet with storage device
Enceinte de climatisation avec dispositif de stockage

(30) Priorität: 02.09.1999 CH 160199
(43) Veröffentlichungstag der Anmeldung: 07.02.2001
(60) Teilanmeldung: 02002021.0
(73) Patentinhaber: LICONIC AG, 9485 Nendeln (LI)
(72) Erfinder: Malin, Cosmas, 9485 Nendeln (LI)
(74) Vertreter: Sutter, Kurt

(56) Entgegenhaltungen:
- EP-A- 0 725 133
- WO-A-98/05753
- WO-A-99/15905
- DE-U- 20 004 202
- US-A- 5 449 229

## Beschreibung

Gegenstand der Erfindung ist ein Klimaschrank gemäss dem Oberbegriff des Anspruchs **1** mit einer integrierten Lageranlage..

Die Lageranlage besteht aus einer Lagervorrichtung und einer Transporteinrichtung. Die Lagervorrichtung enthält Lagerstellen zur Lagerung von Objekten, eine Übergabestelle zur kurzzeitigen Aufnahme der Objekte vor und nach ihrer Lagerung und eine Transporteinrichtung zum Verschieben der Objekte zwischen der Übergabestelle und den Lagerstellen; die Lagerstellen werden durch übereinander angeordnete Fächer von einem oder mehreren gestellähnlichen Lagerschächten gebildet. Die Transporteinrichtung dient zum Transport der Objekte zwischen den Lagerstellen und der Übergabestelle; sie umfasst einen Objektträger, der mittels einer Vertikal-Verschiebevorrichtung, einer Horizontal-Drehvorrichtung und einer Horizontal-Verschiebevorrichtung bewegt wird.

Ein Lagerbehältnis der genannten Art besteht im wesentlichen aus einem Lagerschrank und einer Lageranlage. Der Lagerschrank ist gehäuseartig ausgebildet und weist in einer seiner Wandungen eine durch ein Schleusenfenster verschliessbare Schleusenfensteröffnung auf, durch welche Objekte vor oder nach ihrer Lagerung im Lagerschrank gebracht werden.

Unter Objekten sollen im Rahmen der vorliegenden Beschreibung Einzelteile sowie Behälter mit verschiedenen, insbesondere auch fliessfähigen, Inhalten verstanden werden; ebenfalls als einzelne Objekte werden mehrere Kleinobjekte betrachtet, die zusammen auf einer Art Palette aufgenommen oder aneinander befestigt sind.

Ein Lagerbehältnis der eingangs erwähnten Art ist beispielsweise aus der ***US-5,449,229*** bekannt. Es dient zum Lagern von elektronischen Speichern wie Kassetten oder CDs und könnte in gleicher Ausführung auch für Bücher, Schachteln und ähnliche Gegenstände benutzt werden. Bei diesem Lagerbehältnis ist die Übergabestelle im Inneren des Lagerschrankes, und zwar in einem eignen Schrankabteil, angeordnet und so ausgebildet, dass sie eine Vielzahl von Objekten aufnehmen kann. Die zu lagernden Objekte nehmen im Lagerschrank, an der Übergabestelle und bei ihrem Transport mittels der Transporteinrichtung eine Schräglage ein. Die Schleusenfensteröffnung entspricht in ihrer Abmessung der Übergabestelle, derart, dass bei geöffnetem Schleusenfenster die gesamte Übergabestelle vom Äusseren des Lagerschrankes zugänglich ist. Dieses Lagerbehältnis eignet sich zwar für den vorgesehenen Zweck, nämlich für die Lagerung von Objekten wie elektronische Speicher, bei welchen Lagerbedingungen wie Temperatur, Feuchtigkeit und die Natur des Umgebungsfluids nur in weitesten Grenzen eingehalten werden müssen; es eignet sich aber nicht zur Lagerung von Objekten, die während einer gewissen Zeit unter kontrollierbaren Bedingungen oder mindestens staubfrei gehalten werden müssen. Im weiteren ist die Lageranlage dieses Lagerbehältnisses ungeeignet zur Aufnahme von Objekten, die durch Behälter mit einem Inhalt aus fliessfähigen Stoffe gebildet sind und die daher stets eine horizontale Lage einnehmen müssen.

Lagerbehältnisse mit kontrollierten Klimaverhältnissen werden beispielsweise dann benötigt, wenn die zu lagemden Objekte zu bebrütende Substanzen sind, die nur unter bestimmten Temperaturen und Feuchtigkeitsbedingungen sowie in einer genau definierten Begasungs-Atmosphäre optimal gedeihen. Ein anderes Anwendungsbeispiel für solche Lagerbehältnisse ist das zeitweilige Lagern von Substanzen, die unter Einhaltung genau bestimmter Klimabedingungen gelagert werden müssen. Da die zu verarbeitenden Substanzen sehr teuer sind, besteht das Bestreben, sie nur in Kleinstmengen zu verarbeiten. Für eine effiziente Verarbeitung oder Lagerung werden also entsprechend kleine Lagervorrichtungen beziehungsweise Lagerschränke benötigt, wobei aber die Anforderungen an die Stabilität des Klimas innerhalb der Lagerschränke überproportional ansteigen. Entsprechend der Verkleinerung der Lagervorrichtungen und der Lagerschränke schrumpfen auch die zulässigen Abmessungen für die Transporteinrichtungen, die zur Beladung und Entladung der Lagervorrichtungen dienen, und der Raumbedarf jedes Gerätes muss möglichst klein gehalten werden.

Das Lagerbehältnis gemäss ***US-5,449,229*** ist, wie schon erwähnt, für solche Zwecke ungeeignet, und zwar insbesondere wegen der Ausbildung und Anordnung der Übergabestelle und der Abmessungen der Schleusenfensteröffnung. Die Anordnung der Übergabestelle im Inneren des Lagerschrankes und seine Ausbildung zur Aufnahme einer Vielzahl von Objekten bedingen, dass die Schleusenfensteröffnung verhältnismässig gross ist und dass das Schleusenfenster sehr oft und/oder sehr lang geöffnet werden muss, was der Stabilität des Klimas im Lagerschrank abträglich ist.

Mit der ***EP-0 293 782*** ist sodann ein klimatisierter Lagerschrank bekanntgeworden, der aber ebenfalls eine verhältnismässig grosse Öffnung für die Beladung und Entladung aufweist. Da die Abmessungen der Öffnung für die negative Beeinflussung der Stabilität des Klimas von um so grösserer Bedeutung sind, je kleiner ein Klimaschrank ist, lassen sich im Inneren dieses Klimaschrankes wegen der grossen Öffnung keine stabilen Klimaverhältnisse erzielen.

Das deutsche Gebrauchsmuster ***DE-U 296 13 557*** und die PCT-Anmeldung WO 98/05753 beschreiben klimatisierte Lagerbehältnise mit einer Lagervorrichtung in Form eines drehbaren Karussells. Die Transporteinrichtung umfasst eine Vertikal-Verschiebevorrichtung beziehungsweise ein Liftsystem, um einen Objektträger höhenmässig in eine geeignete Lage zur Übergabe von Objekten zu bringen, und eine Horizontal-Verschiebevorrichtung, um die Objekte abzugeben oder aufzunehmen. Zur winkelmässigen Ausrichtung des Objektträgers auf die Lagervorrichtung dient eine Horizontal-Drehvorrichtung, durch welche das Karussell beziehungsweise die Lagervorrichtung gedreht wird. Wegen des Platzbedarfs eines solchen Karussells kann ein solcher Klimaschrank mit einem integrierten Karussell nicht in kleinen Dimensionen hergestellt werden Ausserdem ist diese Anordnung dynamisch unvorteilhaft, da die verhältnismässig grosse Masse des Karussells immer wieder beschleunigt und verzögert werden muss.

Die ***US-5,733,024*** offenbart ein modulares System für ein Lagerbehältnis und insbesondere eine Transporteinrichtung in zahlreichen Varianten, wobei praktisch alle überhaupt möglichen Bewegungsabfolgen beschrieben werden, die an und für sich keine Erfindung darstellen. Ein Lagerbehältnis mit einer einzigen Schleusenfensteröffnung ist aber nicht beschrieben. Grundsätzlich ist dieses Dokument im Rahmen der vorliegenden Erfindung irrelevant.

Es kann festgestellt werden, dass die vorbekannten Lageranlagen und Lagerbehältnisse die Anforderungen, welche beim Transportieren und Lagern von Objekten, besonders im Zusammenhang mit der Verarbeitung kleiner Mengen aber einer grossen Anzahl von Substanzen, gestellt werden, nicht erfüllen. Insbesondere sind die Probleme im Zusammenhang mit der temporären Lagerung solcher Substanzen in kontrollierbaren Klimaverhältnissen nicht gelöst.

Die **Aufgabe** der Erfindung wird somit darin gesehen,
- eine Lageranlage der eingangs erwähnten Art zu schaffen, welche die Nachteile des Standes der Technik vermeidet und eine rationelle Manipulation von kleinen Objekten erlaubt, und
- ein Lagerbehältnis der eingangs genannten Art zu schaffen, welches die Nachteile des Standes der Technik vermeidet, und kompakt ist.

Die **Lösung** dieser Aufgabe erfolgt erfindungsgemäss
- für den Klimaschrank der eingangs genannten Art durch die Merkmale des kennzeichnenden Teils des Anspruchs **1.**

Vorteilhafte Weiterbildungen des erfindungsgemässen Klimaschrankes sind durch die jeweiligen abhängigen Ansprüche **2** bis **12**.

Der Klimaschrank ist so ausgebildet, dass die Transportwege und die beim Transport der Objekte zu beschleunigenden beziehungsweise zu verzögernden Massen gering sind.

Die Objekte können in den Lagerstellen, in den Übergabestellen und auf dem Objektträger, eine horizontale oder mindestens annähernd horizontale Lage einnehmen; die Lageranlage eignet sich daher besonders, aber nicht ausschliesslich, für Objekte, die durch fliessfähige Massen enthaltende Schalen oder Behälter gebildet sind und die daher nicht um horizontale Achsen gekippt werden dürfen.

Die eigentliche Lagervorrichtung der Lageranlage umfasst zwei oder mehrere Lagerschächte. Jeder Lagerschacht ist so ausgebildet, dass er in mehreren Etagen jeweils eine fachartige Lagerstelle aufweist, in welcher er ein oder gegebenenfalls mehrere Objekte aufnehmen kann. Die Lagerschächte sind im allgemeinen nicht miteinander verbunden. Sie sind gewissermassen sternförmig zur Lagervorrichtung zusammengestellt, derart, dass sich ihre vertikalen Mittelebenen in einer gemeinsamen Vertikalachse schneiden. Die Objekte können einzeln transportiert werden; hierzu werden die Objekte zum Transport einzeln den Lagerschächten entnommen. Die Objekte können aber auch in Gruppen transportiert werden; hierzu werden sie zusammen mit dem Lagerschacht, in welchem sie angeordnet sind, transportiert; die Lagervorrichtung dient in diesem Fall also nicht nur für die Lagerung sondern auch als Transportschacht beziehungsweise Transportgebinde für die Objekte.

Um die extreme erforderliche Kompaktheit zu erzielen, liegt der Winkel, unter welchem sich die vertikalen Mittelebenen benachbarter Lagerschächte schneiden, vorzugsweise in einem Bereich oberhalb von 30°.

Die Transporteinrichtung der Lageranlage weist einen Objektträger zur zeitweiligen Aufnahme jeweils eines Objektes während seines Transportes auf und dient drei Zwecken: Erstens verschiebt die Transporteinrichtung die Objekte vertikal über die Höhe der Lagervorrichtung, zweitens verschwenkt die Transporteinrichtung die Objekte horizontal zwischen Winkeistellungen, in welchen der Objektträger entweder auf die Öffnung eines Lagerschachtes oder auf die Übergabestelle ausgerichtet ist, und drittens schiebt die Transporteinrichtung den Objektträger zwischen einer inneren beziehungsweise Transportlage, in welcher er sich während der Vertikalverschiebung und Horizontalverschwenkung der Objekte befindet, und einer äusseren beziehungsweise Übergabelage, in welcher der Objektträger ein Objekt aufnehmen oder abgeben kann und dazu in einen Lagerschacht oder in der Bereich der Übergabestelle ragt. Sämtliche Bewegungen der Objekte werden also durch die Transporteinrichtung verursacht, im Gegensatz zu einigen der bekannten Lageranlagen, bei welchen die Objekte nicht nur durch die Transporteinrichtung sondern auch durch die drehbar ausgebildete Lagervorrichtung bewegt werden. Die neue Lageranlage ist gegenüber den vorbekannten karussellartigen Lageranlagen vorteilhaft, weil man die abwechselnde Beschleunigung und Verzögerung der relativ grossen Masse des Karussells vermeidet; ausserdem entsteht bei unregelmässig beziehungsweise nicht vollständig beladenen Lagervorrichtungen keine Unwucht. Im weiteren ist es einfacher, Lagervorrichtungen, die sich beim Betrieb des Klimaschrankes nicht bewegen müssen, im Klimaschrank ein- und auszubauen. Schliesslich ist es durch die neue Anordnung auch möglich, die Lagerschächte innerhalb eines Lagerschrankes, insbesondere eines Klimaschrankes während einer Behandlung von Objekten und ausserhalb des Lagerschrankes während einer Lagerung von Objekten in gleich ausgebildete Haltevorrichtungen zu stellen.

Im allgemeinen weisen die Lagerstellen der Lagerschächte und die als Transferplattform ausgebildete Übergabestelle als Aufnahmeelemente für die Objekte nicht durchgehende Ablageflächen sondern lediglich seitliche Auflageleisten auf, die sich in Richtung der jeweiligen Linearverschiebung des Objektträgers erstrecken; in den Lagerstellen beziehungsweise In der Übergabestelle befindliche Objekte liegen also nur mit ihren seitlichen Randzonen auf den Auflageleisten auf. Die als Objektträger benutzte Trägerplatte, welche Durchbrüche aufweisen kann, ist insgesamt schmaler als der gegenseitige Abstand der Auflageleisten eines Faches; auf dem Objektträger ruhende Objekte liegen daher nur mit einer Mittelzone auf dem Objektträger auf. Um ein Objekt von einer Lagerstelle aufzunehmen, wird der nicht beladene Objektträger in Höhe einer unteren Grenze einer Höhenlage unter das Objekt gebracht, dann bis zu einer oberen Grenze derselben Höhenlage angehoben, wobei er das Objekt von den Aufnahmeleisten abhebt, und schliesslich wird der Objektträger in der Höhe der oberen Grenze aus dem Fach zurückgezogen. Umgekehrt wird verfahren, um ein Objekt in eine Lagerstelle zu bringen. In analoger Weise und bei geeigneter Ausbildung der Übergabestelle kann ein Objekt durch den Objektträger von der Übergabestelle übernommen beziehungsweise vom Objektträger an die Übergabestelle übergeben werden. Die eben beschriebenen Anordnung erlaubt es, die Objekte nicht zu kippen sondern in stets gleicher Lage zur Vertikalen zu lagern beziehungsweise zu transportieren.

Der Objektträger kann an seiner der Vertikalachse der Transporteinrichtung abgewandten äusseren Kante und an seiner der Vertikalachse der Transporteinrichtung zugewandten inneren Kante Positionierungselemente aufweisen, welche beim Aufnahmen der Objekte und bei deren Transport die richtige Positionierung der Objekte auf dem Objektträger bewirken.

Es hat sich im Weiteren als vorteilhaft erwiesen, nicht nur einen plattenförmigen Objektträger zu verwenden sondern eine Objektträger-Einheit, in welche der Objektträger integriert -ist. An der Objektträger-Einheit sind Seitenführungen gebildet, um die Objekte während ihrer Aufnahme auf den Objektträger zu führen und sie während ihres weiteren Transportes auf dem Objektträger zu Positionieren beziehungsweise an seitlichen Verschiebungen relativ zum Objektträger zu hindern. Besonders günstig ist es, die Seitenführungen so zu montieren, dass sie solidarisch mit dem Objektträger die Vertikalverschiebung und die Horizontalverschwenkung, nicht aber die Horizontalverschiebung ausführen. Ein Objekt, das mit Hilfe des Objektträgers aus einer Lagerstelle oder einer Übergabestelle entnommen wird, wird bei einer solchen Anordnung während der Horizontalbewegung des Objektträgers aus der äusseren Übergabelage in die innere Transportlage gewissermassen zwischen die dabei ortsfesten Seitenführungen gezogen.

Zur Übergabe der Objekte zwischen dem Objektträger und einer der Lagerstellen oder der Übergabestelle können die Objekte und der Objektträger auch in der Art von Paletten und Gabelstaplern ausgebildet und wirksam sein. Der Objektträger der Transporteinrichtung, welcher einzeln zu transportierende Objekte während ihres Transportes aufnimmt, kann auch in nicht dargestellter Weise als Greifvorrichtung zum Ergreifen und Halten der Objekte ausgebildet sein.

Das neue Lagerbehältnis umfasst den eigentlichen Lagerschrank sowie eine im Lagerschrank angeordnete Lageranlage, wie sie oben beschrieben ist. Das neue Lagerbehältnis weist mindestens eine Schleusenfensteröffnung auf, die auf die Übergabestelle der Lageranlage ausgerichtet ist. Erfindungsgemäss sind die Abmessungen der Schleusenfensteröffnung nur um ein weniges grösser als die Abmessungen eines der Objekte; damit erreicht man, dass das Klima im Lagerschrank durch die Öffnung des Schleusenfensters praktisch nicht beeinträchtigt wird, so dass die Klimastabilität sehr hoch ist. Im Weiteren ist die Übergabestelle ausserhalb des Lagerschrankes angeordnet, so dass innerhalb des eigentlichen Lagerbereiches kein Platz dafür benötigt wird.

Dieses neue Lagerbehältnis eignet sich insbesondere zur Lagerung und zum Transport von in Kleinstmengen anfallenden Substanzen beziehungsweise Objekten, da sie kompakt aufgebaut sind, so dass sowohl der Platzbedarf wie auch die Transportwege minimalisiert werden. Das neue Lagerbehältnis ist auch wegen seiner hohen Klimastabilität für Kleinstmengen günstig, weil bei der Behandlung von Kleinstmengen abweichenden Klimaverhältnisse besonderes gravierende Folgen zeitigen.

Die Übergabestelle am Lagerschrank ist so ausgebildet, dass sie vorzugsweise ein einzelnes, ggfs. aber auch mehrere ihren weiteren Transport erwartende Objekte aufnehmen kann.

Enthalten die Objekte fliessfähige Stoffe, so ist es vorteilhaft oder sogar imperativ, sie stets In horizontaler Lage zu halten beziehungsweise nicht um eine Horizontale zu kippen. Zu diesem Zwecke werden die Lagerstellen und die Übergabestelle als horizontale seitliche Ablagen wie oben beschrieben ausgebildet und die Transporteinrichtung wird wie oben beschrieben so konzipiert, dass die Objekte auf dem Objektträger stets eine horizontale Lage einnehmen.

Der Lagerschrank weist zusätzlich zur Schleusenfensteröffnung vorzugsweise eine weitere Öffnung auf, nämlich eine mit einer Türe verschlossene Türöffnung. Diese ist dazu bestimmt, bei geöffneter Türe einen Transportweg für mindestens einen Lagerschacht der Lagervorrichtung zu bilden, wobei die Türöffnung im Allgemeinen an einer anderen Wandung angeordnet ist als die Schleusenfensteröffnung. Die Lagerschächte, die somit auch als Transportschächte beziehungsweise Transportgebinde dienen, können bei Ihren Transport ganz oder teilweise mit Objekten gefüllt oder leer sein.

Der von dem Klimaschrank umschlossene Raum ist unterteilt in eine Klimazone, in welcher die Lagervorrichtung und die Transporteinrichtung angeordnet sind, und In eine Apparatezone, In welcher ein Klimagenerator und vorzugsweise die Steuerung für die Transporteinrichtung und/oder das Schleusenfenster angeordnet sind. Für die Bedienung des Klimaschrankes ist es Im Allgemeinen vorteilhaft, die Apparatezone in Verlängerung der Vertikalachse, das heisst unterhalb oder oberhalb der Klimazone anzuordnen.

Hierzu ist es besonders günstig, wenn die Lagerschächte voneinander getrennt oder leicht trennbar und einzeln aus dem Klimaschrank entnehmbar sind.

Die Lagervorrichtung enthält in einer günstigen Ausbildung mindestens zwei Lagerschächte, welche sternartig um eine Vertikalachse angeordnet sind, derart, dass ihre vertikalen Mittelebenen sich in der vertikalen Achse schneiden, wobei die Ein- beziehungsweise Austrittsöffnungen der Lagerschächte auf die, die Schwenkachse der Horizontal-Dreheinrichtung bildende, Vertikalachse ausgerichtet sind.

Eine Vorrichtung, welche das Schleusenfenster öffnet, sobald der Objektträger zur Abgabe oder Aufnahme eines Objektes bezüglich seiner Höhe und Winkellage auf das Schleusenfenster ausgerichtet ist, rationalisiert den Betrieb des Klimabehältnisses.

In gewissen Fällen kann es vorteilhaft sein, die Übergabestelle zu schützen, indem sie mit einem haubenartigen Schutz versehen wird.

Weitere Eigenschaften und Vorteile der Erfindung werden im folgenden anhand von Ausführungsbeispielen und mit Bezug auf die Zeichnung beschrieben. Es zeigen:
- **Fig. 1**: ein erstes Ausführungsbeispiel eines Klimabehältnisses nach der Erfindung, jedoch ohne die den Klimaschrank oben begrenzende Wandung, in Draufsicht;
- **Fig. 2**: das in Fig. 1 dargestellte Klimabehältnis, jedoch ohne die dem Betrachter zugewandte Seitenwandung, in Seitenansicht;
- **Fig. 3**: ein zweites Ausführungsbeispiel eines Klimabehältnisses nach der Erfindung, in vereinfachter Darstellung, in Draufsicht;
- **Fig. 4A**: ein Ausführungsbeispiel einer Objektträger-Einheit, in einem Schaubild; und
- **Fig. 4B**: den Objektträger der in Fig. 4A dargestellten Objektträger-Einheit, in einem Vertikalschnitt.

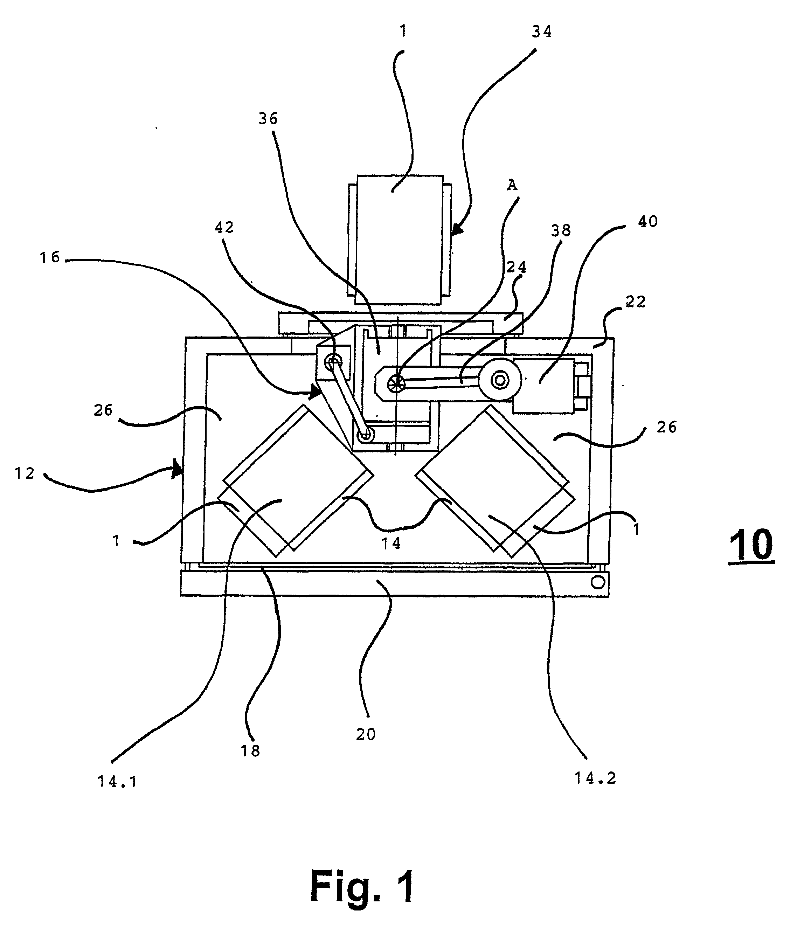

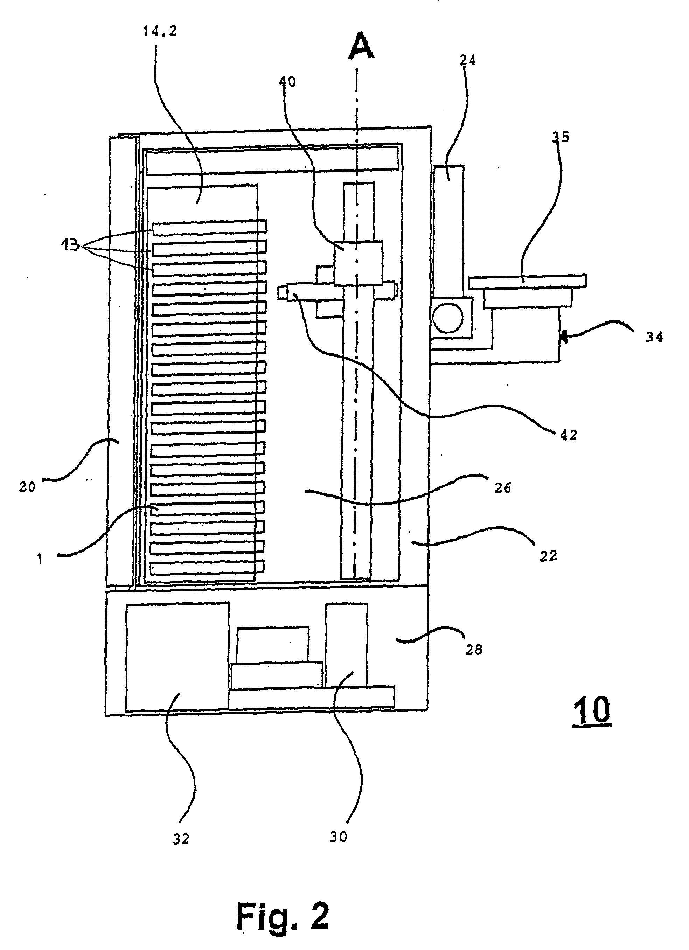

Das in **Fig. 1** und **Fig. 2** dargestellte Lagerbehältnis **10** umfasst einen eigentlichen Lagerschrank **12,** eine im Lagerschrank **12** angeordnete Lagervorrichtung **14** und eine im wesentlichen im Lagerschrank **12** angeordnete Transporteinrichtung **16.** Die Lagervorrichtung **14** und die Transporteinrichtung **16** bilden zusammen eine Lageranlage **15.** Hierzu sei bemerkt, dass eine solche Lageranlage auch ausserhalb des Lagerschrankes **12** angeordnet und operationell sein kann.

Der Lagerschrank **12** weist in einer ersten vertikalen Wandung **18** eine mit einer Türe **20** versehene Türöffnung sowie in einer zweiten vertikalen Wandung **22** eine mit einem Schleusenfenster **24** versehene Schleusenfensteröffnung auf. Die Wandung **18** mit der Türe **20** ist vorzugsweise der Wandung **22** mit dem Schleusenfenster **24** gegenüberliegend angeordnet. Die Türöffnung dient zum Ein- und Ausbringen von Lagerschächten **14.1, 14.2** sowie zum Reinigen und Instandhalten des Innern des Lagerschrankes **12;** die Türe **20** ist im allgemeinen manuell bedienbar. Die Schleusenfensteröffnung dient zum Zu- und Abführen einzelner Objekte **1** durch die Transporteinrichtung **16** zum beziehungsweise vom Inneren des Lagerschrankes **12;** das Öffnen und Schliessen des Schleusenfensters **24** wird automatisch gesteuert; hierzu ist eine nicht dargestellte Vorrichtung vorgesehen, durch welche das Schleusenfenster **24** selbsttätig geöffnet wird, sobald ein Objekt **1** bereit beziehungsweise bezüglich seiner Höhe und Winkellage so angeordnet ist, dass es durch das Schleusenfenster **24** schiebbar ist.

Das Innere des als Klimaschrank ausgebildeten Lagerschrankes **12** ist unterteilt in eine Klimazone **26** und eine Apparate-Zone **28.** In der Höhe der Klimazone **26** sind die Türe **20** und das Schleusenfenster **24** angeordnet. Innerhalb der Klimazone **26** befinden sich die Lagervorrichtung **14** mit den in den Lagerschächten **14.1, 14.2** gelagerten Objekten **1** sowie die wesentlichen Bauteile der Transporteinrichtung **16.** In der Apparate-Zone **28,** die unterhalb der Klimazone angeordnet ist, befinden sich ein Klimagenerator **30** sowie eine Steuereinrichtung **32** zur Steuerung der, Betätigung des Schleusenfensters **24** und der Transporteinrichtung **16.**

Ausserhalb des Lagerschrankes **12,** am Äusseren der Wandung **22** und vor der Schleusenfensteröffnung, ist eine Übergabestelle **34** der Lageranlage **15** angeordnet. Die Übergabestelle **34** ist als Transferplattform **35** ausgebildet und besitzt eine horizontale Nutzfläche. Die Nutzfläche befindet sich im Höhenbereich der Unterkante der Schleusenfensteröffnung des Schleusenfensters **24** und ist zur kurzzeitigen Aufnahme eines der Objekte **1** vorgesehen, jeweils vor der Aufnahme oder nach der Abgabe dieses Objektes **1** von einem beziehungsweise an einen Objektträger **36** der Transporteinrichtung **16** oder von einer beziehungsweise an eine nicht dargestellte externe Transfereinrichtung. Der Objektträger **36** wird im wesentlichen durch eine Trägerplatte gebildet. Der Objektträger 36 kann, wie weiter unten beschrieben, zusätzliche konstruktive Elemente aufweisen, durch welche er zu einer Objektträger-Einheit 36.0 wird. Der Objektträger **36** ist höchstens um ein weniges grösser als das Objekt **1.** Die Abmessungen des mit einem Objekt **1** beladenen Objektträgers **36** bestimmen die Abmessungen der Schleusenfensteröffnung, die nur unwesentlich grösser ist als der beladene Objekträger **36.**

Die Lagervorrichtung **14** umfasst im vorliegenden Fall zwei voneinander getrennte Lagerschächte **14.1, 14.2,** welche voneinander getrennt oder in einfacher Weise voneinander trennbar sind, und welche im Lagerschrank **12** fest montiert sind; sie können sich also nicht drehen, wie dies bei karussellartigen Lagervorrichtungen vorbekannter Lagerschränke der Fall war. Eine Vielzahl von übereinander angeordneten, fachartigen Lagerstellen **13** befindet sich in jedem der Lagerschächte **14.1, 14.2;** diese Lagerstellen **13** sind zur Aufnahme der Objekte **1** vorgesehen, wobei im allgemeinen, aber nicht zwingend, in jedem der Fächer ein Objekt **1** aufgenommen wird.

Die Transporteinrichtung **16** weist den Objektträger **36** auf, der zur Aufnahme von jeweils einem Objekt **1** ausgebildet ist. Die Transporteinrichtung **16** besitzt die Vertikalachse **A,** welche mit der Schnittgeraden der vertikalen Mittel- beziehungsweise Symmetrieebenen der Lagerschächte **14.1, 14.2** zusammenfällt, die sternförmig um die Vertikalachse **A** angeordnet sind.

Die Transporteinrichtung **16** weist eine Horizontal-Drehvorrichtung **38** auf, mit welcher der Objektträger **36** beziehungsweise die Objektträger-Einheit **36.0** um die Vertikalachse **A** geschwenkt und in eine Winkelstellung gebracht werden kann, in der der Objektträger **36** auf einen der Lagerschächte **14.1, 14.2** beziehungsweise die entsprechenden Öffnungen derselben oder auf das Schleusenfenster **24** beziehungsweise die Übergabestelle **34** ausgerichtet ist.

Im weiteren weist die Transporteinrichtung **16** eine Vertikal-Verschiebevorrichtung **40** beziehungsweise einen Höhenlift auf, um den Objektträger **36** beziehungsweise die Objektträger-Einheit **36.0** in vertikaler Richtung zu verschieben und ihn hierbei in definierte Höhenlagen zu bringen; die höhenmässige Anordnung und der Vertikalabstand der Höhenlagen entsprechen den Lagerstellen **13.** Grundsätzlich muss der Objektträger **36** beziehungsweise die Objektträger-Einheit **36.0** in eine der definierten Höhenlagen gebracht werden, um eines der Objekte **1** an eine Lagerstelle **13** oder an die Übergabestelle **34** abzugeben beziehungsweise von einer Lagerstelle **13** oder von der Übergabestelle **34** aufzunehmen. Vorzugsweise erstreckt sich jede der definierten Höhenlagen über eine geringe Vertikaldistanz zwischen einer oberen und einer unteren Grenze; der Vertikalabstand zwischen der unteren und der oberen Grenze einer Höhenlage ist hierbei weit geringer ist als der Vertikalabstand benachbarter Höhenlagen; der Zweck dieser Anordnung wird weiter unten dargelegt.

Schliesslich weist die Transporteinrichtung **16** eine Horizontal-Verschiebevorrichtung **42** auf. Mittels dieser Horizontal-Verschiebevorrichtung **42** lässt sich der Objektträger **36** allein, ohne die restlichen Teile der Objektträger-Einheit 36.0, linear zwischen einer inneren beziehungsweise Transportlage, dargestellt in **Fig. 1,** und einer äusseren beziehungsweise Übergabelage verschieben; die Verschiebung des Objektträgers **36** zwischen der inneren beziehungsweise Transportlage und der äusseren beziehungsweise Übergabelage erfolgt in mehreren Fällen, nämlich stets dann, wenn eines der Objekte **1** an eine der Lagerstellen **13** oder durch das Schleusenfenster **24** an die Übergabestelle **34** abgegeben wird, und natürlich auch dann, wenn eines der Objekte **1** von einer der Lagerstellen **13** oder von der Übergabestelle **34** aufgenommen wird.

Zum Antreiben der Horizontal-Drehvorrichtung **38,** der Vertikal-Verschiebevorrichtung **40** und der Horizontal-Verschiebevorrichtung **42** können verschiedenen geeignete herkömmliche Antriebsanordnungen benutzt werden, beispielsweise mit Riemen oder Zahnstangen und Ritzeln oder auch mit Fluidbetätigung. Vorzugsweise sind der Antrieb der Horizontal-Drehvorrichtung **38** und der Antrieb der Horizontal-Verschiebevorrichtung **42** sowie ggfs. der Vertikal-Verschiebevorrichtung **40** so ausgebildet und angeordnet, dass sie sich während der Verschiebung des Objektträgers **36** längs der Vertikalachse **A** solidarisch mit dem Objektträger **36** verschieben.

Im allgemeinen weisen die Lagerstellen **13** der Lagerschächte **14.1, 14.2** und die Transferplattform **35** der Übergabestelle **34** als Aufnahmeelemente für die Objekte **1** nicht durchgehende Ablageflächen sondern lediglich seitliche Auflageleisten auf, die sich in Richtung der jeweiligen horizontalen Linearverschiebung des Objektträgers **36** erstrecken; in den Lagerstellen **13** beziehungsweise der Übergabestelle **34** befindliche Objekte **1** liegen also nur mit ihren seitlichen Randzonen auf den Auflageleisten auf. Die als Objektträger **36** benutzte Trägerplatte, welche Durchbrüche aufweisen kann, ist insgesamt schmaler als der gegenseitige Abstand der Auflageleisten eines Faches; auf dem Objektträger **36** ruhende Objekte **1** liegen daher nur mit einer Mittelzone auf dem Objektträger **36** auf. Um ein Objekt **1** von einer Lagerstelle **13** aufzunehmen, wird der nicht beladene Objektträger **36** in Höhe der unteren Grenze einer Höhenlage unter das Objekt **1** gebracht, dann bis zur oberen Grenze angehoben, wobei er das Objekt **1** von den Aufnahmeleisten abhebt, und schliesslich wird der Objektträger **36** in der Höhe der oberen Grenze aus dem Fach zurückgezogen. Umgekehrt wird verfahren, um ein Objekt **1** in eine Lagerstelle **13** zu bringen. In analoger Weise und bei geeigneter Ausbildung der Übergabestelle **34** kann ein Objekt **1** durch den Objektträger **36** von der Übergabestelle **34** übernommen beziehungsweise vom Objektträger **36** an die Übergabestelle **34** übergeben werden. Die eben beschriebenen Anordnung erlaubt es, die Objekte **1** nicht zu kippen sondern in stets gleicher Lage zur Vertikalen zu lagern beziehungsweise zu transportieren.

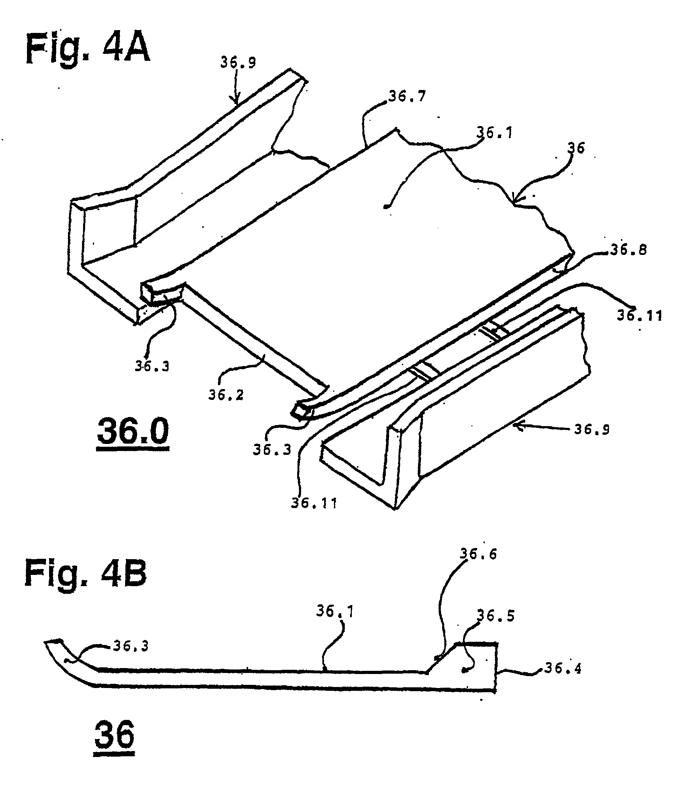

**Fig. 4A** und **Fig. 4B** zeigen die genaue Ausbildung des Objektträgers **36** sowie die schon erwähnte Objektträger-Einheit **36.0.** Zur Aufnahme von jeweils einem der Objekte **1** dient eine eigentliche Trägerfläche **36.1** des Objektträgers **36.** Der Objektträger **36** weist an der quer zu seiner Horizontalverschiebungsrichtung verlaufenden Kante **36.2** Positionierungselemente **36.3** auf. Die Kante **36.2** bildet die äussere Begrenzung des Objektträgers **36** und läuft vor, wenn der Objektträger **36** in eine Lagerstelle **13** oder zur Übergabestelle **34** hin geschoben wird. Die Positionierungselemente **36.3** werden durch quer zur Trägerfläche **36.1** nach oben ragende Nasen **36.3** gebildet, die von den seitlichen Begrenzungen der Trägerfläche **36.1** ausgehen. Diese Nasen bewirken, dass der Objektträger **36** ein aus einer Lagerstelle **13** oder der Übergabestelle **34** entnommenes Objekt **1** bei seiner Vertikalverschiebung tatsächlich mitnimmt. Ein weiteres Positionierungselement **36.5** ist an der, der Kante **36.1** gegenüberliegenden, Kante **36.4** des Objektträgers **36** angeordnet. Dieses Positionierungselement **36.5** ist durch eine Randleiste gebildet, welche quer zur Trägerfläche **36.1** nach oben ragt und eine zur Trägerfläche **36.1** abfallende Schrägfläche **36.6** besitzt. Ein Objekt **1,** das unbeabsichtigt zu nahe der Kante **36.4** des Objektträgers **36** und somit leicht schief zu liegen kommt, gleitet längs der Schrägfläche **36.6** auf die Trägerfläche **36.1** in eine horizontale Lage. In Einzelheiten können die Positionierungselemente **36.3** und **36.5** auch anders ausgebildet sein als oben beschrieben.

Die Objektträger-Einheit **36.0** weist zur Führung beziehungsweise Positionierung der Objekte **1** parallel zu Seitenkanten **36.7, 36.8** des Objektträgers **36** gerichtete Seitenführungen **36.9** auf. Diese Seitenführungen **36.9** sind nicht fest am Objektträger **36** montiert sondern so befestigt, dass sie solidarisch mit dem gesamten Objektträger **36** durch die Horizontal-Drehvorrichtung **38** und durch die Vertikal-Verschiebevorrichtung **40** bewegt werden, aber die Bewegung durch die Horizontal-Verschiebevorrichtung **42** nicht mitmachen. Bei der Aufnahme eines Objektes **1** aus einer Lagerstelle **13** oder aus der Übergabestelle **34** wird dieses Objekt **1,** auf der Trägerfläche **36.1** liegend, mit dem Objektträger **36** gewissermassen zwischen die Seitenführungen **36.9** gezogen. Hierbei kann eine Vorpositionierung durch Schrägwandungen **36.10** der Seitenführungen **36.9** erfolgen. Die Seitenführungen **36.9** weisen einen Querschnitt auf, der mindestens annähernd die Form eines **L** hat. Sie sind über Stege **36.11** befestigt und ihr gegenseitiger Abstand beziehungsweise ihr jeweiliger Abstand von der Trägerfläche **36.1** kann verstellbar sein; **Fig. 4A** zeigt, nur als Beispiel, die beiden Seitenführungen **36.9** in verschiedenen Stellungen, wobei die Längs der Seitenkante **36.8** verlaufende Seitenführung **36.9** weiter von der Trägerfläche **36.1** entfernt ist als die längs der Seitenkante **36.7** verlaufende Seitenführung **36.9.**

Vorteilhafterweise sind die Abmessungen des Objektträgers **36** nur unwesentlich grösser als die Abmessungen der Objekte **1.**

Zur Übergabe der Objekte **1** zwischen dem Objektträger **36** und einer der Lagerstellen **13** oder der Übergabestelle **34** können die Unterflächen der Objekte **1** und der Objektträger **36** auch in der Art von Paletten beziehungsweise und Gabelstapler-Gabeln ausgebildet und wirksam sein. Femer kann die Übergabe der Objekte **1,** insbesondere zwischen Objekträger **36** und Übergabestelle **34,** auch mit Hilfe von Schiebern oder zangenartigen Elementen durchgeführt werden; insbesondere wenn ein Kippen der Objekte toleriert werden kann. Hierbei ist es nicht notwendig, für jede Höhenlage zwei Grenzen vorzusehen.

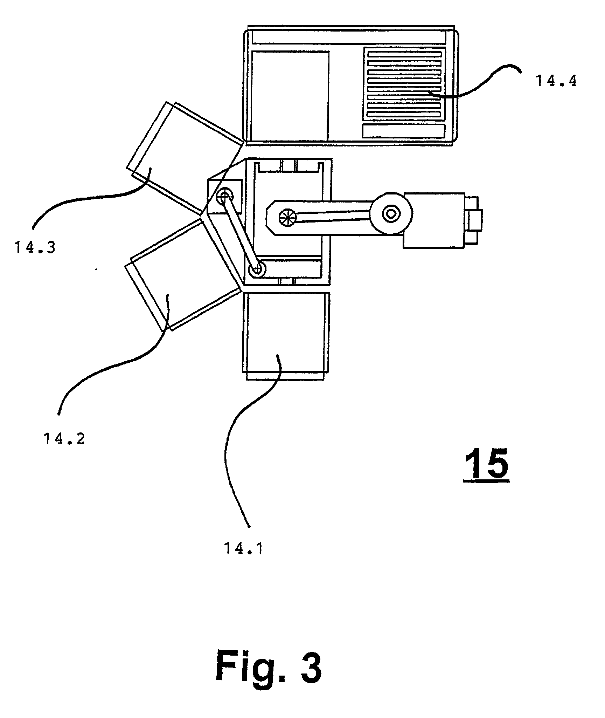

Bei dem in den **Fig. 1** und **2** dargestellten Lagerbehältnis **10** ist eine Lagervorrichtung **16** mit nur zwei Lagerschächten **14.1, 14.2** eingebaut, welche auch als Transportgebinde benutzt werden können. Es ist im Rahmen der Erfindung beziehungsweise gemäss **Fig. 3** aber auch möglich, Lagervorrichtungen **14** mit mehr als zwei Lagerschächten beziehungsweise Transporteinheiten auszubilden, die alle sternartig um die Vertikalachse **A** angeordnet werden. Die Anzahl der Lagerschächte, die angeordnet werden können, hängt von den Grössenverhältnissen ab; näherungsweise nimmt jeder der Lagerschächte einen Schacht-Sektor eines fiktiven Zylinders mit der Vertikalachse **A** in Anspruch; ein für das Schleusenfenster **24** und die Transporteinrichtung **16** bestimmter Sektor darf nicht mit einem Lagerschacht belegt werden, wobei sich dieser Sektor gegebenenfalls über einen grösseren Winkel erstreckt als die Schacht-Sektoren. Grundsätzlich ist es vorteilhaft, die verschiedenen teile so zu dimensionieren, und anzuordnen, dass der Winkel, unter welchem sich die vertikalen Mittel- beziehungsweise Symmetrieebenen benachbarter Lagerschächte **14.1, 14.2** schneiden, in einem Bereich über 30° liegt.

Die Lagerschächte beziehungsweise Lagereinheiten einer Lagervorrichtung müssen nicht alle gleich ausgebildet sein. **Fig. 3** zeigt eine Lageranlage **15** mit einer Lagereinheit **14.4** in Form eines Readers beziehungsweise Dispensers und drei Lagerschächte **14.1, 14.2, 14.3** mit Kassetten.

Alternativ kann das Lagerbehältnis auch so ausgebildet sein, dass sich eine Schleusenfensteröffnung in einer oberen horizontalen Wandung, also im Deckel, oder unteren horizontalen Wandung, also im Boden, befindet, oder dass es zwei Schleusenfenster, je eines im Deckel und im Boden, besitzt. Die Objekte werden dann in vertikaler Richtung zu- beziehungsweise abgeführt. Eine solche Anordnung erlaubt eine vollkommen sternförmige 360° überdeckende Anordnung der Lagerschächte.

**Fig. 1, Fig. 2** und **Fig. 3** zeigen, wie oben erwähnt, das Lagerbehältnis **10** mit dem Lagerschrank **12** und der darin angeordneten Lageranlage **15,** bestehend aus der Lagervorrichtung **14** und der Transporteinrichtung **16.** Wie schon erwähnt, lässt sich eine gleiche Lageranlage **15** auch, in nicht dargestellter Weise, ausserhalb eines Lagerschrankes verwenden.

## Patentansprüche

1. Klimaschrank, umfassend einen Lagerschrank (12) zum Lagern einer Vielzahl von Objekten (1), mit mindestens einer, mittels eines öffenbaren Schleusenfensters (24) verschlossenen, Schleusenfensteröffnung in einer Wandung (22) des Lagerschrankes (12), sowie eine Lageranlage (15), welche integral mit dem Lagerschrank (12) ausgebildet ist, und welche aufweist
- eine Lagervorrichtung **(14)**
- mit mindestens zwei voneinander getrennten bzw. trennbaren Lagerschächten **(14.1, 14.2)** zur Lagerung der Objekte **(1)**, wobei die Lagerschächte **(14,1, 14.2)** stemartig um eine vertikale Achse **(A)** zusammengestellt sind, derart, dass ihre vertikalen Mittelebenen sich in der vertikalen Achse **(A)** schneiden, wobei jeder der mindestens zwei Lagerschächte **(14.1, 14.2)** mehrere übereinander angeordnete Lagerstellen **(13)** enthält deren Ein- beziehungsweise Austrittsöffnungen auf die vertikale Achse **(A)** ausgerichtet sind, wobei die mindestens zwei Lagerschächte als Transportgebinde für die Objekte dienen **(1)** können, und
- mit mindestens einer Übergabestelle **(34)** zur kurzzeitigen Aufnahme der Objekte **(1)** vor und nach deren Lagerung,
- eine Transportelnrichtung **(16)** mit einem zur Aufnahme jeweils eines der Objekte **(1)** ausgebildeten Objektträger **(36),** welche Transporteinrichtung **(16)** aufweist,
- eine Vertikal-Verschiebevorrichtung **(40),** um den Objektträger **(36)** längs der vertikalen Achse **(A)** Ober die Höhe der Lagervorrichtung **(14)** zu verschieben und in eine Übergabehöhe für eine der Lagerstellen **(13)** oder die mindestens eine Übergabestelle **(34)** zu bringen;
- eine Horizontal-Drehvorrichtung **(38)**, um den Objektträger **(36)** um eine vertikale Drehachse zu verschwenken und ihn auf eine der Lagerstellen **(13)** oder die mindestens eine Übergabestelle **(34)** auszurichten, und
- eine Horizontal-Verschiebevorrichtung **(42),** um den Objektträger **(36)** zwischen einer inneren Transportlage, in welcher er vertikal verschiebbar und horizontal verschwenkbar ist, und einer äusseren Übergabelage, in welcher er beim Übergang der Objekte **(1)** zwischen dem Objektträger **(36)** und einer der Lagerstellen **(13)** oder der mindestens einen Übergabestelle **(34)** angeordnet ist, zu verschieben,
wobei
- die Objekte **(1)** in den Lagerstellen **(13)**, auf dem Objektträger **(36)** und in der Übergabestelle **(34)** einen vorbestimmten Winkel zur Vertikalen einnehmen können, wobei vorzugsweise eine Grundfläche der Objekte **(1)** stets horizontal gerichtet sein können,
- der Objektträger **(36)** derart ausgebildet ist, dass er die Objekte **(1)** aufnehmen und/oder abgeben kann,
- die Übergabestelle **(34)** ausserhalb des Lagerschrankes **(12)** im Bereich der Schleusenfensteröffnung angeordnet ist, und
- die Schleusenfensteröffnung zum Zu- und Abführen der Objekte **(1)** durch die Transporteinrichtung **(16)** ausgelegt ist, **dadurch gekennzeichnet, dass**
- die Übergabestelle (34) als am Äusseren der Wandung (22) angeordnete Transferplattform (35) ausgebildet ist,
- die vertikale Achse **(A)** und die Drehachse zusammenfallen,
- die Lagerschächte **(14.1, 14.2)** fest um die vertikale Achse **(A)** angeordnet sind, wobei die Ein- beziehungsweise Austrittsöffnungen aller Lagerschächte auf die vertikale Achse **(A)** ausgerichtet sind, und
- der Klimaschrank untertellt ist in eine Klimazone **(26)**, in welcher die Lagervorrichtung **(14)** und die Transporteinrichtung **(16)** angeordnet sind, und in eine in der vertikalen Verlängerung der Klimazone **(26)** angeordnete Apparatezone **(28)**, in welcher ein Klimagenerator **(30)** und vorzugsweise die Steuerung für die Transporteinrichtung **(16)** und/oder für das Schleusenfenster **(24)** angeordnet sind,

2. Klimaschrank **(10)** nach Anspruch 1,
**dadurch gekennzeichnet,**
**dass** die Übergabestelle **(34)** zur Aufnahme jeweils eines einzelnen Objektes **(1)** ausgebildet ist.

3. Klimaschrank (10) nach einem der Ansprüche **1** oder **2,**
**dadurch gekennzeichnet,**
**dass** die Vertikal-Verschiebevorrichtung **(40)** und/oder die Horizontal-Drehvorrichtung **(38)** und/oder die Horizontal-Verschiebevorrichtung **(42)** Antriebe aufweisen, die so ausgebildet und angeordnet sind, dass sie sich bei einer Verschiebung des Objektträgers **(36)** längs der vertikalen Achse **(A)** solidarisch mit dem Objektträger **(36)** bewegen.

4. Klimaschrank **(10)** nach einem der Ansprüche **1** bis **3,**
**dadurch gekennzeichnet,**
**dass** der Objektträger **(36)** eine Trägerfläche **(36.1)** besitzt, welche
- an einer quer zur Horizontalverschiebung gerichteten Kante **(36.2)** quer von der Trägerfläche **(36.1)** aufwärts ragende Positionierungselemente **(36.3)** aufweist, die vorzugsweise durch zwei seitliche Nasen gebildet sind, und/oder
- an einer quer zur Horizontalverschiebung gerichteten Kante **(36.4)** ein quer von der Trägerfläche **(36.1)** aufwärts ragendes Positionierungselement **(36.5)** aufweist, welches vorzugsweise eine zur Trägerfläche **(36.1)** abfallende Schrägfläche **(36.6)** besitzt.

5. Klimaschrank **(10)** nach einem der Ansprüche **1** bis **4**,
**dadurch gekennzeichnet,**
**dass** zum Führen und Positionieren der Objekte **(1)** auf dem in einer Objektträger-Einheit **(36.0)** integrierten Objektträger **(36)** Seitenführungen **(36.9)** vorgesehen sind, die sich parallel zur Horizontalverschiebung des Objektträgers **(36)** erstrecken und in konstantem Abstand von der vertikalen Achse **(A)** angebracht sind, derart, dass sie solidarisch mit dem Objektträger **(36)** Vertikalverschiebungen und Horizontalverschwenkungen durchführen.

6. Klimaschrank **(10)** nach einem der Ansprüche **2** bis **5,**
**dadurch gekennzeichnet,**
**dass** mindestens eine weitere Schleusenfensteröffnung vorgesehen ist, welche mittels eines weiteren Schleusenfensters verschliessbar ist, wobei vorzugsweise die erstgenannte Schleusenfensteröffnung zum Zuführen der Objekte **(1)** in die Klimazone und die weitere Schleusenfensteröffnung zum Abführen der Objekte **(1)** aus der Klimazone benutzbar sind.

7. Klimaschrank **(10)** nach mindestens einem der Ansprüche **1** bis **6,**
**dadurch gekennzeichnet,**
**dass** der Klimaschrank eine in einer Wandung **(18)** angeordnete und mit einer Türe **(20)** verschlossene Türöffnung aufweist, welche dazu bestimmt ist, bei geöffneter Türe **(20)** einen Transportweg für mindestens einen der mindestens zwei Lagerschächte **(14.1, 14.2)** der Lagervorrichtung **(14)**, welcher mindestens teilweise mit Objekten **(1)** gefüllt sein kann, zu bilden.

8. Klimaschrank **(10)** nach einem der Ansprüche **2** bis **7**,
**dadurch gekennzeichnet,**
**dass** sie eine Vorrichtung aufweist, durch welche das Schleusenfenster **(24)** geöffnet wird, wenn der Objektträger **(36)** zur Abgabe oder Aufnahme eines Objektes **(1)** bezüglich seiner Höhe und Winkellage auf die Schleusenfensteröffnung **(24)** ausgerichtet ist.

9. Klimaschrank **(10)** nach einem der Ansprüche **2** bis **8,**
**dadurch gekennzeichnet,**
- **dass** die Schleusenfensteröffnung in einer quer zur vertikalen Achse **(A)** verlaufenden Wandung des Klimaschrankes angeordnet ist,
- **dass** sich die Lagerschächte **(14.1, 14.2, 14.3)** längs 360° um die vertikale Achse **(A)** erstrecken,
- **dass** die Übergabestelle **(34)** jenseits der Wandung der Schleusenfensteröffnung angeordnet ist,
- **dass** vorzugsweise eine zweite Schleusenfensteröffnung in der der Wandung der erstgenannten Schleusenfensteröffnung gegenüberliegenden Wandung des Klimaschrankes angebracht und eine weitere Übergabestelle jenseits dieser gegenüberliegenden Wandung angeordnet ist,
- um die Objekte **(1)** in Richtung der vertikalen Achse **(A)** in den und aus dem Klimaschrank zu fördern.

10. Klimaschrank **(10)** nach einem der vorhergehenden Ansprüche,
**dadurch gekennzeichnet,**
- **dass** die Apparatezone **(28)** in Verlängerung der vertikalen Achse **(A)** unterhalb der Klimazone angeordnet ist.

11. Klimaschrank **(10)** nach einem der vorhergehenden Ansprüche,
**dadurch gekennzeichnet,**
- **dass** der Antrieb der Horizontal-Drehvorrichtung **(38)** und der Antrieb der Horizontal-Verschiebevorrichtung **(42)** so ausgebildet und angeordnet sind, dass sie sich während der Verschiebung des Objektträgers **(36)** längs der vertikalen Achse **(A)** soldidarisch mit dem Objektträger **(36)** verschieben.

12. Klimaschrank **(10)** nach Anspruch **11,**
**dadurch gekennzeichnet,**
- **dass** der Antrieb der Vertikal-Verschiebevorrichtung **(40)** so ausgebildet und angeordnet ist, dass er sich während der Verschiebung des Objektträgers **(36)** längs der vertikalen Achse **(A)** soldidarisch mit dem Objektträger **(36)** verschiebt.

## Claims

1. Climatic cabinet comprising a storage cabinet (12) for storing a plurality of objects (1), with at least one lock window opening, closed with an openable lock window (24), in a wall (22) of the storage cabinet (12), further comprising a storage arrangement (15), which is designed integrally with the storage cabinet (12) and which comprises
- a storage device (14)
- with at least two from each other separate or separable storage shafts (14.1, 14.2) for storing objects (1), wherein the storage shafts (14.1, 14.2) are arranged in a star shape around a vertical axis (A), such that their vertical centre planes intersect in the vertical axis (A), wherein each of the at least two storage shafts (14.1, 14.2) comprises several storage spaces (13) arranged on top of each other, whose inlet and outlet openings are directed to the vertical axis (A), wherein the at least two storage shafts can serve as transport container for the objects (1) and
- with at least one delivery device (34) for short time reception of objects (1) before and after their storage,
- a transport device (16) with an object carrier (36) designed for the reception of one object (1) at the time, which transport device (16) comprises,
- a vertical displacement device (40), for displacing the object carrier (36) along the vertical axis (A) over the height of the storage device (14) and to bring it to a transfer level for one of the storage spaces (13) or the at least one delivery device (34);
- a horizontal rotation device (38) for pivoting the object carrier (36) around a vertical rotation axis and to align it with one of the storage space (13) or the at least one delivery device (34), and
- a horizontal displacement device (42), for displacing the object carrier (36) between an inner transport position, in which it is vertically displaceable and horizontally pivotable, and an outer transfer position, in which it is positioned during the transfer of the objects (1) between the object carrier (36) and one of the storage spaces (13) or the at least one delivery device (34),
wherein
- the objects (1) in the storage spaces (13), on the object carrier (36) and in the delivery device (34) take up a predetermined angle in respect to the vertical line, wherein preferably a base surface of the objects (1) can always be oriented horizontally,
- the object carrier (36) is designed such, that it can receive objects (1) and/or deliver them,
- the delivery device (34) is arranged outside of the storage cabinet (12) in the area of the lock window opening, and
- the lock window opening is designed for introducing and removing objects (1) by the transport device (16), **characterised in that**
- the delivery device (34) is designed as a transfer platform (35) arranged at the outside of the wall (22),
- the vertical axis (A) and the rotation axis coincide,
- the storage shafts (14.1, 14.2) are arranged fixedly around the vertical axis (A), wherein the inlet, or outlet openings of all storage shafts are oriented to the vertical axis (A), and
- the climatic cabinet is divided in a climatic zone (26), in which the storage device (14) and the transport device (16) are arranged, and in an apparatus zone (28), arranged in a vertical extension of the climatic zone (26), in which a climate generator (30) and preferably the control for the transport device (16) and/or the lock window (24) are arranged.

2. Climatic cabinet (10) according to claim 1, **characterised in that** the delivery device (34) is designed for the reception of a single one of the objects (1) at a time.

3. Climatic cabinet (10) according to one of the claims 1 or 2, **characterised in that** the vertical displacement device (40) and/or the horizontal rotation device (38) and/or the horizontal displacement device (42) have drives which are designed and arranged such that in the process of a movement of the object carrier (36) they move together with the object carrier (36) along the vertical axis (A).

4. Climatic cabinet (10) according to one of the claims 1 to 3, **characterised in that** the object carrier (36) has a support surface (36.1), which
- at an edge (36.2) oriented transversly in respect to the horizontal displacement comprises positioning elements (36.3) extending transversely from the support surface (36.1) upwardly, which are preferably constituted by two lateral protrusions, and/or
- at an edge (36.4) oriented transversly in respect to the horizontal displacement comprises a positioning element (36.5) extending transversely from the support surface (36.1) upwardly, which preferably has an inclined surface (36.6) falling away toward the support surface (36.1).

5. Climatic cabinet (10) according to one of the claims 1 to 4, **characterised in that** lateral guide elements (36.9) are provided for guiding and positioning objects (1) on the object carrier (36), which object carrier is integrated in an object carrier unit (36.0), which guide elements extend parallel to the horizontal displacement of the object carrier (36) and are mounted at a constant distance from the vertical axis (A) such that they perform vertical displacement and horizontal pivoting together with the object carrier (36).

6. Climatic cabinet (10) according to one of the claims 2 to 5, **characterised in that** it has at least one further lock window opening, which can be closed by means of a further lock window, wherein preferably the first mentioned lock window opening can be used for introducing objects (1) into the climatic zone and the further lock window openings can be used for removing objects (1) from the climatic zone.

7. Climatic cabinet (10) according to one of the claims 1 to 6, **characterised in that** the climatic cabinet has a door opening, which is arranged in a wall (18) and is closed with a door (20), which is designed to form, while the door (20) is open, a transport path for at least one of the at least two storage shafts (14.1, 14.2) of the storage device (14), which can be filled at least partially with objects (1).

8. Climatic cabinet (10) according to one of the claims 2 to 7, **characterised in that** it has a device by means of which the lock window (24) is opened when the object carrier (36) is oriented toward the lock window opening (24) in respect to its elevation and angular position for delivering or receiving an object (1).

9. Climatic cabinet (10) according to one of the claims 2 to 8, **characterised in,**
- **that** the lock window opening is arranged in a wall of the climatic cabinet that extends transversally in respect to the vertical axis (A),
- **that** the storage shafts (14.1, 14.2, 14.3) extend over 360° around vertical axis (A),
- **that** the delivery device (34) is arranged on the other side of the lock window opening,
- **that** preferably a second lock window opening is located in the wall opposite to the wall of the first mentioned lock window opening of the climatic cabinet, and a further transfer device is located on the other side of this opposite wall,
- for conveying the objects (1) in direction of the vertical axis (A) into and out of the climatic cabinet.

10. Climatic cabinet (10) according to one of the preceding claims, **characterised in that**
- the apparatus zone (28) is arranged in extension of the vertical axis (A) underneath the climatic zone.

11. Climatic cabinet (10) according to one of the preceding claims, **characterised in that**
- the drive of the horizontal rotation device (38) and the drive of the horizontal displacement device (42) are designed and arranged such, that they move during a displacement of the object carrier (36) along the vertical axis (A) together with the object carrier (36).

12. Climatic cabinet (10) according to claim 11, **characterised in that**
- the drive of the vertical displacement device (40) is designed and arranged such that it moves during a displacement of the object carrier (36) along the vertical axis (A) together with the object carrier (36).

## Revendications

1. Armoire climatisée, avec une armoire de stockage (12) pour stocker de nombreux objets (1) et dont au moins une paroi (22) comporte au moins une ouverture de sas fermée par une fenêtre de sas (24) amovible, et avec une unité de stockage (15) formant partie intégrale de l'armoire de stockage (12) et comportant
- un dispositif de stockage (14)
- avec aux moins deux cages de stockage (14.1, 14.2) séparées ou séparables pour le stockage des objets (1), les cages (14.1, 14.2) étant agencées en étoile autour d'un axe vertical (A) de manière à ce que leurs plans centraux verticaux se coupent le long de l'axe (A), chacune des au moins deux cages (14.1, 14.2) comportant plusieurs emplacements de stockage superposés (13) dont les ouvertures de chargement et de déchargement sont alignées sur l'axe (A), les au moins deux cages pouvant servir de conteneur de transport pour les objets (1), et
- avec au moins un emplacement d'échange (34) pour brièvement entreposer les objets (1) avant et après leur stockage,
- un dispositif de transport (16) comprenant un porte-objet (36) agencé pour recevoir un objet (1) à la fois, le dispositif de transport comportant
- un dispositif de déplacement vertical (40) pour déplacer le porte-objet (36) le long de l'axe vertical (A) sur la hauteur du dispositif de stockage (14) et pour l'amener à une hauteur de transfert correspondant à un des emplacements de stockage (13) ou à au moins un emplacement d'échange;
- un dispositif de rotation horizontale (38) pour faire pivoter le porte-objet (36) autour d'un axe vertical et l'aligner avec un des emplacements de stockage (13) ou au moins un emplacement d'échange (34), et
- un dispositif de déplacement horizontal (42) pour déplacer le porte-objet (36) entre une unité de transport intérieure dans laquelle il est déplaçable verticalement et peut pivoter horizontalement, et une unité de transfert extérieure dans laquelle il est disposé lors du transfert des objets (1) entre le porte-objet (36) et un des emplacements de stockage (13) ou au moins un des emplacements d'échange (34),
- les objets (1) pouvant être orientés à un angle prédéterminé par rapport à la verticale tant dans les emplacements de stockage (13) que sur le porte-objet (36) et dans l'emplacement d'échange (34), une surface inférieure des objets (1) restant de préférence toujours à l'horizontale,
- le porte-objet (36) étant agencé de façon à pouvoir recevoir ou délivrer les objets (1), et
- l'emplacement d'échange (34) étant disposé à l'extérieur de l'armoire de stockage (12), dans la région de l'ouverture de sas qui est elle-même agencée pour permettre l'amenée et la sortie des objets (1) au moyen du dispositif de transport (16), **caractérisé en ce que**
- l'emplacement d'échange (34) forme une plate-forme de transfert (35) agencée sur l'extérieur de la paroi (22),
- l'axe vertical (A) et l'axe de rotation coïncident,
- les cages de stockage (14.1, 14.2) sont fixes autour de l'axe vertical (A), les ouvertures d'entrée respectivement de sortie de toutes les cages étant orientées vers cet axe (A),
- l'armoire climatisée est divisée en une zone climatisée (26) dans laquelle sont disposés le dispositif de stockage (14) et le dispositif de transport (16), et une zone d'outillage (28) située dans le prolongement vertical de la zone climatisée (26), cette zone d'outillage contenant un climatisateur (30) et de préférence les moyens commandant le dispositif de transport (16) et/ou la fenêtre de sas (24).

2. Armoire climatisée (10) selon la revendication 1, **caractérisée en ce que** l'emplacement d'échange (34) est agencé pour recevoir un seul objet (1) à la fois.

3. Armoire climatisée (10) selon une des revendications 1 ou 2, **caractérisée en ce que** le dispositif de déplacement vertical (40) et/ou le dispositif de déplacement horizontal (42) et/ou le dispositif de rotation horizontale (38) comportent des dispositifs d'entraînement agencés et disposés de manière à se mouvoir solidairement avec le porte-objet (36) lors du déplacement de celui-ci le long de l'axe vertical (A).

4. Armoire climatisée selon une des revendications 1 à 3, **caractérisée en ce que** le porte-objet (36) comporte une surface porteuse (36.1) qui porte sur une arête (36.2) perpendiculaire au déplacement horizontal, des organes de positionnement (36.3) s'étendant transversalement vers le haut à partir de la surface porteuse (36.1), ces organes formant de préférence deux protubérances latérales, et/ou
- un organe de positionnement (36.5) disposé sur une arête (36.4) perpendiculaire au déplacement horizontal, cet organe s'étendant vers le haut, transversalement par rapport à la surface porteuse (36.1) et possédant de préférence une surface (36.6) inclinée vers le bas en direction de la surface porteuse (36.1).

5. Armoire climatisée (10) selon une des revendications 1 à 4, **caractérisée en ce que** des guides latéraux (36.9) pour guider et positionner les objets (1) sont prévus sur le porte-objet (36) et intégré dans une unité porte-objet (36.0), ces guides s'étendant parallèlement au déplacement horizontal du porte-objet (36) et étant disposées à distance constante de l'axe vertical (A), de façon à effectuer des déplacements verticaux et des pivotements horizontaux de façon solidaire avec le porte-objet (36).

6. Armoire climatisée (10) selon une des revendications 2 à 5, **caractérisée en ce qu'**il est prévu au moins une seconde ouverture de sas pouvant être fermée par une seconde fenêtre de sas, l'ouverture de sas nommée en premier servant de préférence à l'introduction d'objets (1) dans la zone climatisée et la seconde ouverture de sas servant de préférence à la sortie des objets (1) de cette zone.

7. Armoire climatisée (10) selon au moins une des revendications 1 à 6, **caractérisée en ce qu'**elle comporte une ouverture de porte pratiquée dans une paroi (18) et fermée par une porte (20) cette ouverture étant destinée à livrer passage, lorsque la porte (20) est ouverte, à au moins une des au moins deux cages (14.1, 14.2) du dispositif de stockage (14), cette cage pouvant être au moins partiellement garnie d'objets (1).

8. Armoire climatisée (10) selon une des revendications 2 à 7, **caractérisée en ce qu'**elle comporte un dispositif ouvrant la fenêtre de sas (24) lorsque le porte-objet (36) est aligné en hauteur et en position angulaire avec la fenêtre (24) du sas pour introduire ou retirer un objet (1).

9. Armoire climatisée (10) selon une des revendications 2 à 8, **caractérisée en ce que**
- l'ouverture de sas est ménagée dans une paroi de l'armoire perpendiculaire à l'axe vertical (A),
- les cages de stockage (14.1, 14.2, 14.3) entourent l'axe (A) sur 360°,
- l'emplacement d'échange (34) est disposé au-delà de la paroi comportant l'ouverture de sas,
- une seconde ouverture de sas est de préférence ménagée dans la paroi de l'armoire climatisée opposée à celle comportant l'ouverture de sas mentionnée en premier, et qu'un emplacement d'échange additionnel est disposé au-delà de cette paroi opposée
- pour transférer les objets (1) en direction de l'axe vertical (A) afin de les faire entrer dans l'armoire climatisée et sortir de celle-ci.

10. Armoire climatisée (10) selon une des revendications précédentes, **caractérisée en ce que** la zone d'outillage (28) est disposée sous la zone climatisée, dans la prolongation de l'axe vertical (A).

11. Armoire climatisée (10) selon une des revendications précédentes, **caractérisée en ce que** les entraînements du dispositif de rotation horizontale (38) et du dispositif de déplacement horizontal (42) sont agencés et disposés de façon à se mouvoir ensemble avec le porte-objet (36) lors du déplacement de celui-ci le long de l'axe vertical (A).

12. Armoire climatisée selon la revendication 11, **caractérisée en ce que** l'entraînement du dispositif de déplacement vertical (40) est agencé et disposé de façon à se mouvoir ensemble avec le porte-objet (36) lors du déplacement de celui-ci le long de l'axe vertical (A).
